(19) Europäisches Patentamt
European Patent Office
Office européen des brevets

(11) **EP 4 361 900 B1**

(12) **EUROPEAN PATENT SPECIFICATION**

(45) Date of publication and mention of the grant of the patent:
**26.08.2026 Bulletin 2026/35**

(21) Application number: **21947001.0**

(22) Date of filing: **21.06.2021**

(51) International Patent Classification (IPC):
***G06N 10/60*** *(2022.01)* ***G06N 10/20*** *(2022.01)*
*G06N 10/40* *(2022.01)*

(52) Cooperative Patent Classification (CPC):
**G06N 10/60; G06N 10/20;** G06N 10/40

(86) International application number:
**PCT/JP2021/023462**

(87) International publication number:
**WO 2022/269712 (29.12.2022 Gazette 2022/52)**

(54) **METHOD FOR PARTITIONING MULTIPLE QUBIT OBSERVABLES, PROGRAM FOR PARTITIONING MULTIPLE QUBIT OBSERVABLES, AND INFORMATION PROCESSING DEVICE**

VERFAHREN ZUR PARTITIONIERUNG MEHRERER QUBIT-OBSERVABLES, PROGRAMM ZUR PARTITIONIERUNG MEHRERER QUBIT-OBSERVABLES UND INFORMATIONSVERARBEITUNGSVORRICHTUNG

PROCÉDÉ DE PARTITIONNEMENT DE MULTIPLES DONNÉES OBSERVABLES DE BITS QUANTIQUES, PROGRAMME DE PARTITIONNEMENT DE MULTIPLES DONNÉES OBSERVABLES DE BITS QUANTIQUES ET DISPOSITIF DE TRAITEMENT D’INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.05.2024 Bulletin 2024/18**

(73) Proprietor: **FUJITSU LIMITED**
**Kawasaki-shi, Kanagawa 211-8588 (JP)**

(72) Inventor: **KURITA, Tomochika**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(56) References cited:
**US-A1- 2020 342 343**

- **PRANAV GOKHALE ET AL: "Minimizing State Preparations in Variational Quantum Eigensolver by Partitioning into Commuting Families", ARXIV.ORG, CORNELL UNIVERSITY LIBRARY, 201 OLIN LIBRARY CORNELL UNIVERSITY ITHACA, NY 14853, 31 July 2019 (2019-07-31), XP081452908**
- **COCCHI EUGENIO ET AL: "Graph Partitioning into Hamiltonian Subgraphs on a Quantum Annealer", ARXIV.ORG, 18 April 2021 (2021-04-18), pages 1 - 6, XP093180931, Retrieved from the Internet <URL:https://arxiv.org/pdf/2104.09503> [retrieved on 20240702], DOI: 10.48550/arxiv.2104.09503**
- **TZU-CHING YEN; ARTUR F. IZMAYLOV: "Cartan sub-algebra approach to efficient measurements of quantum observables", ARXIV.ORG, CORNELL UNIVERSITY LIBRARY, 201 OLIN LIBRARY CORNELL UNIVERSITY ITHACA, NY 14853, 30 September 2020 (2020-09-30), 201 Olin Library Cornell University Ithaca, NY 14853 , XP081774981**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 361 900 B1

## Description

TECHINICAL FIELD

The present embodiments relates to a multi-qubit observable partitioning method, a multi-qubit observable partitioning program, and an information processing apparatus.

BACKGROUND ART

In a quantum computer, electronic information called a quantum bit (qubit) is used. The quantum bit may take a superposition state of of " 0 " and " 1 ". It is also possible to create a quantum entanglement state with a plurality of quantum bits. The quantum computer may obtain a solution to a complicated problem in a short time by calculating all possibilities simultaneously in parallel using the superposition state and the quantum entanglement state.

When the quantum computer is used, there is a problem that it can be solved much faster than a classical computer. Note that an algorithm for solving a problem with the quantum computer is referred to as a quantum algorithm, and an algorithm for solving a problem with the classical computer is referred to as a classical algorithm. For example, there is a problem in which, in the classical algorithm, calculation of about $N^N$ steps (exponential time) is needed to obtain a solution, whereas, in the quantum algorithm, calculation of about $N^2$ steps (polynomial time) is sufficient (N is a natural number indicating a magnitude of the problem). For example, the Deutsch and Jozsa algorithm, the Shor algorithm and the like are problems that enable calculation in a short time by the quantum computer.

What may be read out from the quantum bit in the quantum computer is a value in the z-axis direction in the Bloch sphere. In addition, only " 0 " or " 1 " can be read from the quantum bit. For example, when a quantum state 1/√2 (square root 2) (|0>+|1>) is measured, "0" and "1" appear with a probability of 50% each. This is because the superposition state of the quantum bit is destroyed by the measurement to become a classical bit.

In order to completely know the quantum state, it is needed to read not only the z-axis of the Bloch sphere but also values of the x-axis and the y-axis. The value of the x-axis or y-axis the y-axis may be measured by performing an operation of converting the value to the z-axis before the measurement and reading the value after the conversion operation. Note that when the quantum bit is measured, the superposition state of the quantum bit is destroyed. Therefore, in order to completely know the quantum state, the quantum calculation for measuring each of the x-axis, the y-axis, and the z-axis is repeatedly executed.

The states of one or more quantum bits are represented using a plurality of observables. In order to completely know the state of n quantum bits, it is only necessary to measure expected values of $4^n - 1$ observables (n is a natural number). By obtaining the expected value for each observable, the state of the quantum bit may be completely known. When an expected value is obtained for each observable, one quantum circuit is basically created for each observable. In the quantum computer, the measurements of $10^4$ - $10^5$ times measurements are made per observable to reduce statistical errors.

As a technique related to the quantum computer, for example, a technique related to grouping of Pauli character strings using entangled measurement for designing the quantum circuit that enables quantum computing has been proposed. Further, there has also been proposed a technique related to QUANTON representation for emulating quantum-like computation by a classical processor.

Furthermore, a technique related to simultaneous measurement of a plurality of observables has also been proposed. In this technique, a plurality of observables may be measured by one quantum circuit.

PRIOR ART DOCUMENT

Patent Document

[Patent Document 1] Japanese Patent Application Laid-Open No. 2020-144400
[Patent Document 2] Japanese National Publication of International Patent Application No. 2018-521382

Non Patent Document

[Non-Patent Document 1] Pranav Gokhale, Olivia Angiuli, Yongshan Ding, Kaiwen Gui, Teague Tomesh, Martin Suchara, Margaret Martonosi, Frederic T. Chong, & quot ; Minimizing State Preparations in Variational Quantum Eigensolver by Partitioning into CommutIng Families & quot ; arXiv : 1907.13623 [quant-ph], 31 Jul 2019
Reference may be made to Cocchi Eugenio ET AL: "Graph Partitioning into Hamiltonian Subgraphs on a Quantum

Annealer", arXiv.org, 18 April 2021.

SUMMARY OF INVENTION

TECHNICAL PROBLEM

In the simultaneous measurement of the expected values of the plurality of observables, a set (partition) of simultaneously measurable observables is generated. Each observable is included in one of the partitions. The simultaneous measurement of the expected values by the quantum computer is performed for each of a predetermined number of observables included in the same partition. In this case, the smaller the number of partitions is, the more efficient the measurement of the state of the quantum bit is. However, when the number of observables to be measured increases, the amount of calculation for generating the partitions including more observables becomes enormous, and it is difficult to reduce the number of partitions.

In one aspect, an object of the present disclosure is to reduce the number of partitions in which the simultaneously measurable observables are collected.

SOLUTION TO PROBLEM

The present invention is defined by the independent claims, to which reference should now be made. Specific embodiments are defined in the dependent claims. In one approach, a method for partitioning a multi-qubit observable is provided in which a computer performs the following operations:

The computer determines whether or not simultaneous measurement of expected values is possible for each pair of two observables among a plurality of observables representing states of a plurality of quantum bits. Next, the computer generates an Ising model that includes a variable indicating whether or not each of the plurality of observables is included in a first partition that is a subset of the plurality of observables and in which a value of a Hamiltonian increases when the pair of observables that cannot be simultaneously measured is included in the first partition and the value of the Hamiltonian decreases as the number of observables included in the first partition increases. Then, the computer generates the first partition including one or more observables based on a value of a variable corresponding to each of the plurality of observables obtained by searching the ground state of the Ising model.

EFFECT OF INVENTION

According to one aspect, the number of partitions in which the simultaneously measurable observables are collected may be reduced.

The foregoing and other objects, features and advantages of the disclosure will become apparent from the following description taken in conjunction with the accompanying drawings which illustrate, by way of example, a preferred embodiment of the disclosure.

BRIEF DESCRIPTION OF DRAWINGS

FIG. 1 is a diagram illustrating an example of a method for partitioning a multi-quantum-bits observable according to a first embodiment;
FIG. 2 is a diagram illustrating an example of a system configuration;
FIG. 3 is a diagram illustrating an example of a hardware of a classical computer;
FIG. 4 is a diagram for explaining a simultaneous measurement method of observables;
FIG. 5 is a diagram illustrating a determination example of an exchange relationship;
FIG. 6 is a diagram illustrating an example of partitioning;
FIG. 7 is a diagram illustrating an example of partitioning;
FIG. 8 is a block diagram illustrating an example of a function of a classical computer;
FIG. 9 is a diagram illustrating an example of processing performed by an exchange relationship determination unit;
FIG. 10 is a diagram illustrating an example of partition generation processing;
FIG. 11 is a diagram illustrating an example of repetitive processing of partition generation;
FIG. 12 is a diagram illustrating an example of measurement of an expected value of an observable using a quantum circuit for simultaneous measurement;
FIG. 13 is a flowchart illustrating an example of an observable measurement procedure;
FIG. 14 is a flowchart (1/2) illustrating an example of a procedure of a partitioning process;

FIG. 15 is a flowchart (2/2) illustrating an example of a procedure of a partitioning process;
FIG. 16 is a diagram illustrating a comparison result of a number of partitions for each partitioning scheme;
FIG. 17 is a diagram illustrating a comparison result of calculation time for each partitioning scheme;

## DETAILED DESCRIPTION OF EMBODIMENTS

Hereinafter, an embodiment will be described with reference to the drawings. Note that each embodiment may be implemented by combining a plurality of embodiments as long as there is no inconsistency.

### [First Embodiment]

First, a first embodiment will be described. The first embodiment is a partitioning method of a multi-quantum-bits observable for reducing a number of partitions in which observables that may be measured simultaneously are collected using an Ising model.

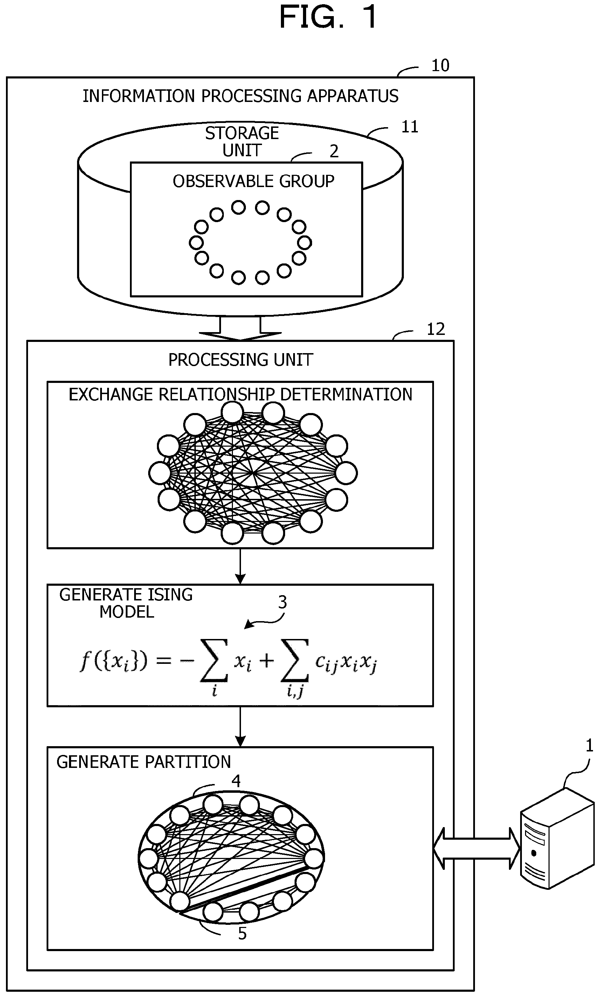

FIG. 1 is a diagram illustrating an example of a for partitioning method of the multi-quantum-bits observable according to the first embodiment. FIG. 1 illustrates an example in which the processing of the partitioning method of the multi-quantum-bits observable is performed by an information processing apparatus 10. The information processing apparatus 10 may implement the partitioning method of the multi-quantum-bits by executing, for example, a partitioning program of the multi-quantum-bits observable.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The information processing apparatus 10 performs partitioning of a plurality of observables representing states of quantum bits. The information processing apparatus 10 is coupled to an annealing-type computer 1, and determines an observable to be included in a partition using the annealing-type computer 1 at the time of partitioning.

The storage unit 11 stores observable group 2. The observable group 2 includes a plurality of observables to be measured. In the example of FIG. 1, the circles in the observable group 2 represent the observables. The observables to be measured are determined in accordance with a problem to be solved using the quantum computer. For example, when it is desired to completely know the state of n quantum bits, $4^n$-1 observables are included in the observable group 2.

The processing unit 12 performs partitioning to divide the observable group 2 into a plurality of partitions. The processing unit 12 generates the plurality of partitions one by one. In the example of FIG. 1, the processing unit 12 first generates the first partition 4, and then generates the second partition 5 based on the observables not included in the partition 4. For example, the processing unit 12 performs the following processing.

The processing unit 12 determines whether or not simultaneous measurement is possible for each pair of two observables among the plurality of observables included in the observable group 2. For example, the processing unit 12 determines that the simultaneous measurement is possible if the order of the tensor products of the observables with each other can be exchanged. In the example of FIG. 1, the pairs of observables that can be measured simultaneously are coupled by lines.

Further, the processing unit 12 generates the Ising model 3. The Ising model 3 includes a variable indicating whether or not each of the plurality of observables is included in the first partition 4 which is a subset of the plurality of observables. In addition, in the Ising model 3, when the pair of observables in which the order of the tensor product cannot be exchanged is included in the first partition 4, a value of the Hamiltonian increases. Furthermore, in the Ising model 3, the value of the Hamiltonian decreases as a number of observables included in the first partition 4 increases.

The processing unit 12 generates the first partition 4 including one or more observables based on the value of the variable of each of the plurality of observables obtained by a search in which the Ising model 3 is in a ground state. A state in which the Hamiltonian becomes a minimum value is the ground state of the Ising model 3. For example, when the Ising model 3 is in the ground state, the processing unit 12 generates the first partition 4 including the observable corresponding to the variable indicating to be included in the first partition 4.

The Ising model 3 becomes in the ground state when the pair of observables whose expected values cannot be simultaneously measured is not included in the first partition 4. Therefore, for any pair of observables included in the generated first partition 4, the simultaneous measure of the expected values is possible. Further, the Hamiltonian of the Ising model 3 has a smaller value as the number of observables included in the first partition 4 increases. Therefore, when the Ising model 3 is in the ground state, the number of variables included in the first partition 4 becomes maximum. For example, by generating the first partition 4 based on the Ising model 3 in the ground state, more observables may be included in the first partition 4.

Further, the processing unit 12 repeats the partition generation processing many times until all the observables are included in any partition. For example, after generating the first partition 4, the processing unit 12 limits the variables of the Ising model 3 to variables corresponding to remaining observables not included in the generated first partition 4. Then,

the processing unit 12 generates the second partition 5 including one or more remaining observables based on each of the values of the variables of the remaining observables obtained by the search of the ground state of the Ising model 3 including the variables corresponding to the remaining observables. The processing unit 12 repeats such a second partition generation process until all the observables are included in any partition.

The processing unit 12 causes the annealing-type computer 1 to search for the ground state of the Ising model 3. The processing unit 12 instructs the annealing-type computer 1 to search for the ground state of the Ising model 3, and acquires the value of the variable of each of the plurality of observables when the Ising model 3 becomes in the ground state from the annealing-type computer 1.

By performing partitioning using the Ising model 3 in this way, more observables can be included in one partition. As a result, a final number of partitions is reduced. In addition, by using the annealing computer 1 to search for the ground state of the Ising model 3, it is possible to execute partitioning in a short time so as to reduce the number of partitions.

The generated partitions 4 and 5 may be used for an efficiency of the state measurement of the quantum bit by the gate-type quantum computer (not shown). For example, the processing unit 12 selects a predetermined number of target observables from the same partition among the generated partitions 4 and 5. The processing unit 12 generates a quantum circuit for simultaneously measuring the expected values of the selected target observables. Then, the processing unit 12 instructs the gate-type quantum computer to simultaneously measure the expected value of the target observable based on the generated quantum circuit.

Since partitioning is performed using the Ising model 3, the number of partitions is suppressed to be small. Therefore, many observables can be measured simultaneously with other observables. As a result, it is possible to efficiently measure the expected value of the observable by the gate-type quantum computer.

[Second Embodiment]

Next, a second embodiment will be described. The second embodiment is a computer system that efficiently measures the complete state of a quantum bit.

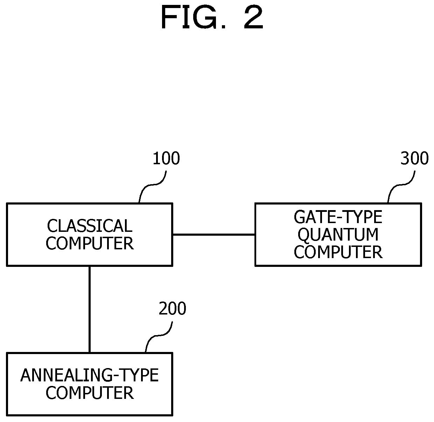

FIG. 2 is a diagram illustrating an example of a system configuration. The classical computer 100 is coupled to the annealing-type computer 200 and the gate-type quantum computer 300. The classical computer 100 is, for example, a Neumann-type computer. The annealing-type computer 200 is a non-Neumann-type computer for calculating the ground state of the Ising model. The annealing-type computer 200 may be any of a computer using a superconducting quantum circuit and a computer reproducing a quantum phenomenon with a semiconductor circuit. The gate-type quantum computer 300 is a non-Neumann-type computer capable of solving a general-purpose problem by operating a quantum gate.

The classical computer 100 performs quantum computation by controlling the annealing-type computer 200 and the gate-type quantum computer 300. At this time, the classical computer 100 classifies a plurality of observables of the problem to be calculated into any one of a plurality of partitions. The process of classification into the partitions is called partitioning. For example, the classical computer 100 generates an Ising model for generating a partition from information on a set of simultaneously measurable observables, and causes the annealing-type computer 200 to calculate a ground state of the Ising model. Then, the classical computer 100 controls the gate-type quantum computer 300 to simultaneously measure the expected values of two or more observables included in the same partition.

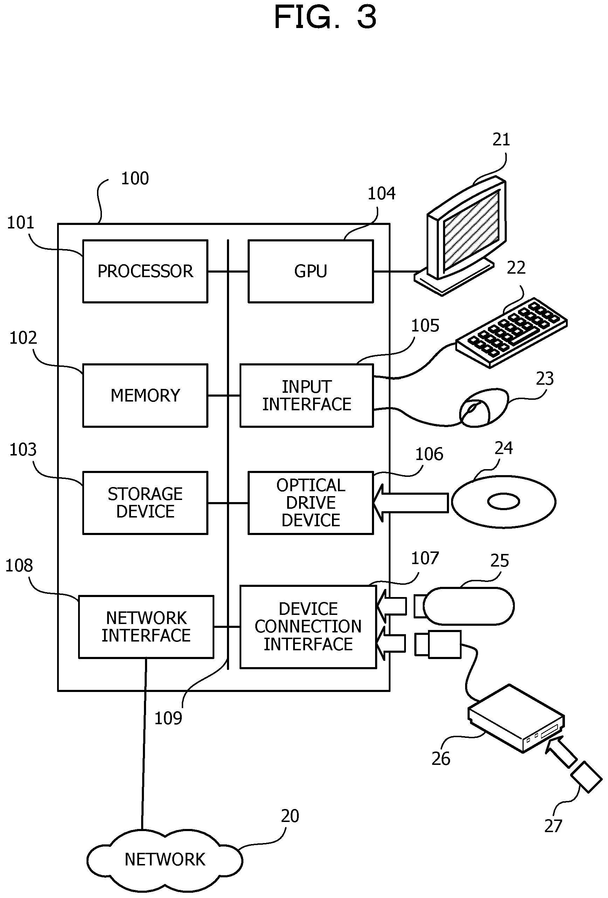

FIG. 3 is a diagram illustrating an example of a hardware of a classical computer. A processor 101 controls an entire device of the classical computer 100. A memory 102 and a plurality of peripheral devices are coupled to the processor 101 via a bus 109. The processor 101 may be a multi-processor. The processor 101 is, for example, a central processing unit (CPU), a micro processing unit (MPU), or a digital signal processor (DSP). At least a part of the functions realized by the processor 101 executing the program may be realized by an electronic circuit such as an application specific integrated circuit (ASIC) or a programmable logic device (PLD).

Memory 102 is used as the main storage for the classical computer 100. The memory 102 temporarily stores at least a part of an Operating System (OS) program and an application program to be executed by the processor 101. The memory 102 also stores various types of data used for processing by the processor 101. As the memory 102, for example, a volatile semiconductor storage device such as a random access memory (RAM) is used.

The peripheral devices coupled to the bus 109 include a storage device 103, a Graphics Processing Unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the computer. The storage device 103 stores programs of the OS, application programs, and various data. As the storage device 103, for example, a hard disk drive (HDD) or a solid state drive (SSD) may be used.

The GPU104 is an arithmetic device that performs image processing, and is also called a graphic controller. A monitor 21 is coupled to the GPU 104. The GPU 104 displays an image on a screen of the monitor 21 in accordance with an instruction from the processor 101. Examples of the monitor 21 include a display device using organic electro lumines-

cence (EL), a liquid crystal display device, and the like.

A keyboard 22 and a mouse 23 are coupled to the input interface 105. The input interface 105 transmits signals sent from the keyboard 22 or the mouse 23 to the processor 101. The mouse 23 is an example of a pointing device, and other pointing devices may be used. Examples of the other pointing devices include a touch panel, a tablet, a touch pad, and a trackball.

The optical drive device 106 reads data recorded on the optical disk 24 or writes data to the optical disk 24, by using laser light or the like. The optical disk 24 is a portable recording medium on which data is recorded so as to be readable by reflection of light. Examples of the optical disc 24 include a Digital Versatile Disc (DVD), a DVD-RAM, a Compact Disc Read Only Memory (CD-ROM), and a CD-R (Recordable) / RW (ReWritable).

The device connection interface 107 is a communication interface for coupling the peripheral devices to the classical computer 100. For example, a memory device 25 and a memory reader/writer 26 can be coupled to the device connection interface 107. The memory device 25 is a recording medium having a function of communicating with the device connection interface 107. The memory reader/writer 26 is a device that writes data to the memory card 27 or reads data from the memory card 27. The memory card 27 is a card-type recording medium.

The network interface 108 is coupled to the network 20. The network interface 108 transmits and receives data to and from the annealing-type computer 200 or the gate-type quantum computer 300 via the network 20. The network interface 108 is a wired communication interface that is coupled to a wired communication device such as a switch or a router by a cable. Further, the network interface 108 may be a wireless communication interface communicatively coupled to a wireless communication device such as a base station or an access point by radio waves.

The classical computer 100 can realize the processing functions of the second embodiment by the hardware described above. Further, the information processing apparatus 10 according to the first embodiment can also be implemented by a hardware similar to that of the classical computer 100 illustrated in FIG. 3.

The classical computer 100 realizes the processing functions of the second embodiment by executing a program recorded in a computer-readable recording medium, for example. The program describing the processing contents to be executed by the classical computer 100 can be recorded in various recording media. For example, a program to be executed by the classical computer 100 may be stored in the storage device 103. The processor 101 loads at least a part of the program in the storage device 103 into the memory 102 and executes the program. Further, the program to be executed by the classical computer 100 may be recorded in a portable recording medium such as the optical disk 24, the memory device 25, or the memory card 27. The program stored in the portable recording medium becomes executable after being installed in the storage device 103 under the control of the processor 101, for example. Alternatively, the processor 101 may read the program directly from the portable recording medium and execute the program.

Next, the simultaneous measurement method of the observables will be specifically described. Taking into account the superposition and quantum entanglement of quantum bits, as well as stochastic mixing, a quantum state can be represented using a density operator $\rho$. $\rho$ can be expressed as a $2^n \times 2^n$ matrix (n is a number of quantum bits). The density operator $\rho$ can be represented using a plurality of observables (64 in the case of 3 quantum bits). Each observable is a linearly independent basis that constitutes $\rho$ representing the quantum state. For example, in the case of three quantum bits is expressed by the following equation.

$$P = \lambda_0 I_0 I_1 I_2 + \lambda_1 X_0 I_1 I_2 + \lambda_2 Y_0 I_1 I_2 + \lambda_3 Z_0 I_1 I_2 + \lambda_4 I_0 X_0 I_2 + \lambda_5 X_0 X_1 I_2 + \cdots + \lambda_{62} Y_0 Z_1 Z_2 + \lambda_{63} Z_0 Z_1 Z_2$$

$\lambda_0, \ldots, \lambda_{63}$ are real-number coefficients. The subscripted X, Y, and Z are Pauli operators and are 2×2 Pauli matrices ($\sigma_x$, $\sigma_y$, $\sigma_z$). The numerical value of the subscript is a number of the quantum bit to be measured. The subscripted I is an identity operator and is a 2×2 identity matrix. The identity operator is also a kind of Pauli operator.

The observable is represented by an array of the Pauli operators. This array of the Pauli operators is called a Pauli character string. The Pauli character string indicates the tensor product of the Pauli operators represented by the Pauli character string. The expected value of the observable of the k-th (natural number) term is $\lambda_k$. For example, the expected value of $X_0X_1I_2$ is $\lambda_5$.

Since $\lambda_0$ is always 1, it is not necessary to measure an expected value. As a result, as described above, the number of observables to be measured to completely know the state of n quantum bits is $4^n$-1. For example, when n = 1, the state of the quantum bit can be completely known by measuring three observables: {X, Y, Z}. In the case of n = 2, the number of observables whose expected values are to be measured is 15: {$I_0X_1$, $I_0Y_1$, $I_0Z_1$, $X_0I_1$, $X_0X_1$, $X_0Y_1$, $X_0Z_1$, $Y_0I_1$, $Y_0X_1$, $Y_0Y_1$, $Y_0Z_1$, ...}.

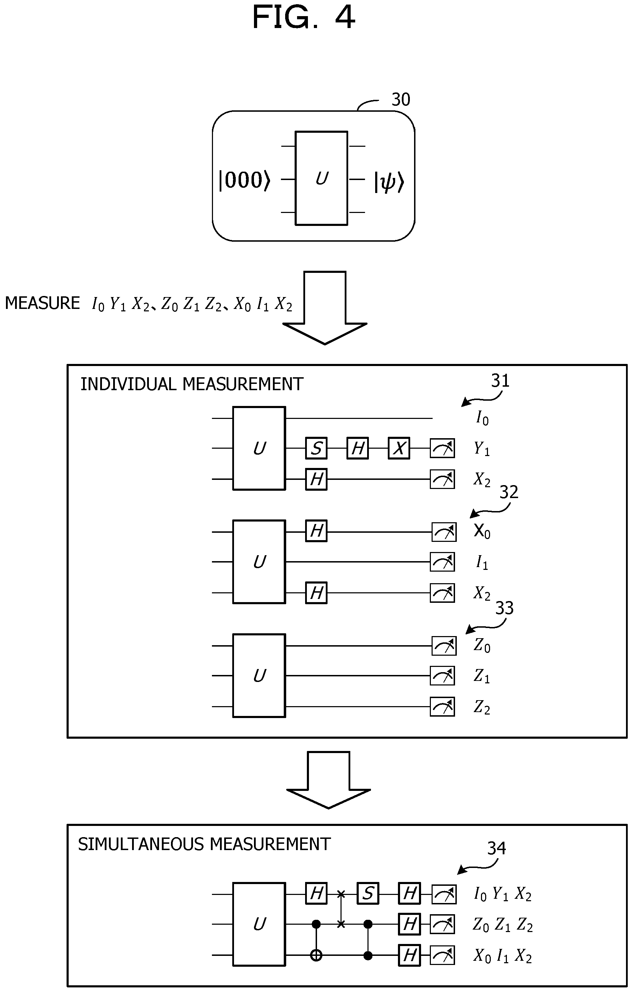

In the measurement of the expected values of a large number of observables, a plurality of observables may sometimes be measured simultaneously by a gate operation before the measurement. FIG. 4 is a diagram for explaining a simultaneous measurement method of observables. In the example of FIG. 4, it is assumed that the quantum state φ> of three quantum bits is obtained. It is assumed that three observables "$I_0Y_1Y_2$, $Z_0Z_1Z_2$, $X_0I_1X_2$ " of the quantum circuit 30 corresponding to the problem to be solved are measured. A horizontal line of the quantum circuit 30 corresponds to the quantum bit.

When the individual measurement is performed, the quantum circuits 31 to 33 corresponding to the respective three observables are generated. The rectangular symbols illustrated on the horizontal lines of the quantum circuits 31 to 33 are quantum gates that act on the respective quantum bits. The "S" rectangle indicates the S gate. The "X" rectangle indicates the X gate. The "H" rectangle indicates an H gate (Hadamard gate). At the position where the measurement symbol of each quantum bit is indicated, the state of the corresponding quantum bit is measured.

For example, in the quantum circuit 31, in order to calculate the expected value of the observable "$I_0Y_1X_2$", three quantum bits are used to measure the expected values of "$I_0$", "$Y_1$", and "$X_2$". "$I_0$" corresponding to the Oth quantum bit is an identity operator, and the measurement of the expected value is not necessary. For the first quantum bit, operations of the S gate, the H gate, and the X gate are performed. Thus, the expected value of $Y_1$ can be measured from the first quantum bit. For the second quantum bit, the operation of the H gate is performed. Thus, the expected value of $X_2$ can be measured from the first quantum bit. Based on these measurement results, the expected value of the observable "$I_0Y_1X_2$" can be obtained.

In the quantum circuit 32, in order to calculate the expected value of the observable "$X_0I_1X_2$", the expected values of "$X_0$", "$I_1$", and "$X_2$" are measured using three quantum bits. "$I_1$" corresponding to the first quantum bit is an identity operator and the measurement is not necessary. For the Oth quantum bit, the operation of the H gate is performed. Thus, the expected value of the $X_0$ can be measured from the Oth quantum bit. For the second quantum bit, the operation of the H gate is performed. Thus, the expected value of the $X_2$ can be measured from the second quantum bit. Based on these measurements, the expected value of the observable "$X_0I_1X_2$" can be obtained.

In order to calculate the expected value of the observable "$Z_0Z_1Z_2$", the quantum circuit 33 measures the expected values of "$Z_0$", "$Z_1$", and "$Z_2$" using three quantum bits. In the quantum circuit 33, the operations by the quantum gates at an output side of the original quantum circuit 30 are not performed and it is possible to measure the expected values of "$Z_0$", "$Z_1$", and "$Z_2$" by measuring each of the Oth to second quantum bits. Based on these measurement results, the expected value of the observable "$Z_0Z_1Z_2$" can be obtained.

In the quantum circuits 31 to 33, an expected value of one observable is obtained based on the measurement results of the three quantum bits. Therefore, in order to obtain the expected values of the three observables, the state of each quantum bit is measured by the three quantum circuits 31 to 33.

In the quantum circuit 34 for the simultaneous measurement, on the output side of the quantum circuit 30, the H gate is first provided for the Oth quantum bit, and a CNOT gate is provided in which the first quantum bit is set as a control bit and the second quantum bit is set as a target bit. Next, a SWAP gate for the Oth quantum bit and the first quantum bit is provided. Next, an S gate for the Oth quantum bit and a CZ gate in which the first quantum bit is set as a control bit and the second quantum bit is set as a target bit are provided. Finally, each quantum bit is provided with an H gate.

Measuring the Oth quantum bit of quantum circuit 34 yields the expected value of the observable "$I_0Y_1X_2$". When the first quantum bit of the quantum circuit 34 is measured, an expected value of the observable "$Z_0Z_1Z_2$" is obtained. When the second quantum bit of the quantum circuit 34 is measured, an expected value of the observable "$X_0I_1X_2$" is obtained.

In the quantum circuit 34, the expected value of one observable can be measured from one quantum bit, and the expected values of three observables can be measured simultaneously. In this way, the three observables that are individually measured using the quantum circuits 31 to 33 can be simultaneously measured using one quantum circuit 34.

The observable that can be measured simultaneously has a condition. For example, if "AB = BA" (commutative) in observables A and B, the two observables A and B can be measured simultaneously. For example, when it is determined whether two observables are commutative, it is determined whether operators corresponding to the same quantum bit are commutative or anti-commutative (exchange relationship).

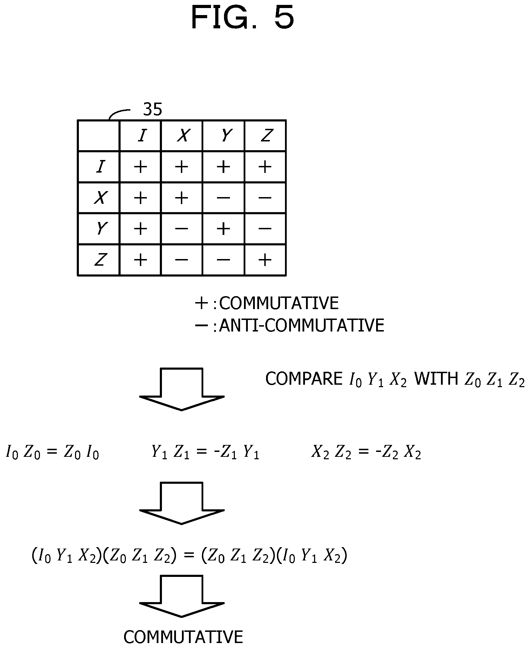

FIG. 5 is a diagram illustrating a determination example of the exchange relationship. The commutative/anti-commutative correspondence table 35 indicates whether each combination of operators is commutative or anti-commutative. A symbol indicating whether an operator illustrated in a row and an operator illustrated in a column are commutative or anti-commutative is illustrated at a position where the row and the column intersect. A "+" symbol indicates commutative and a "-" symbol indicates anti-commutative. In the case of commutative, the value does not change even if the order of the product is changed, but in the case of anti-commutative, the sign is reversed when the order of the product is changed.

For example, in a case of $I_0Y_1X_2$ and $Z_0Z_1Z_2$, it is determined whether each of a set of $I_0$ and $Z_0$, a set of $Y_1$ and $Z_1$, and a set of $X_2$ and $Z_2$ is commutative or anti-commutative. In this case, "$I_0Z_0 = Z_0$" (commutative), "$Y_1Z_1 = - Z_1Y_1$" (anti-commutative), and "$X_2Z_2 = - Z_2X_2$" (anti-commutative) are established. If the number of anti-commutative sets is an even number (including 0), the commutative "$(I_0Y_1X_2)\ (Z_0Z_1Z_2) = (Z_0Z_1Z_2)\ (I_0Y_1X_2)$ " is established as a whole.

In the partitioning of the observables, the partitions are generated so as to be commutative in all sets between the observables belonging to the same partition.

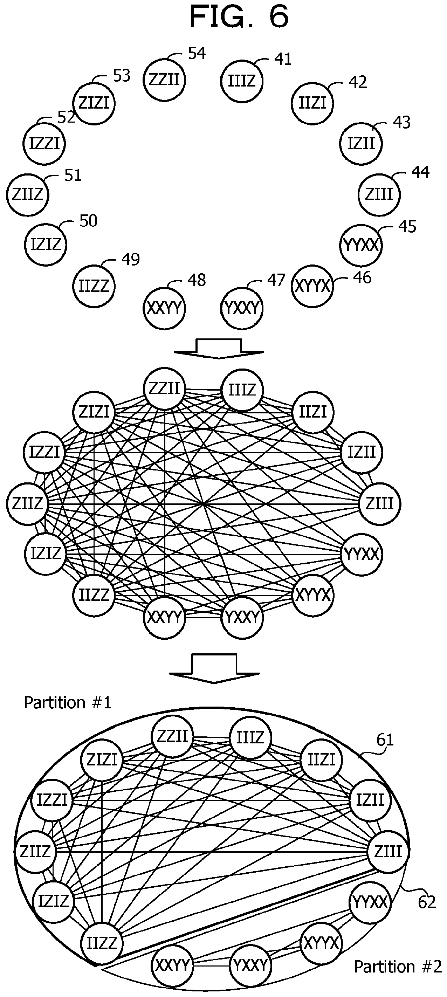

FIG. 6 is a diagram illustrating an example of partitioning. For example, for the 14 observables 41 to 54, the exchange relationship with other observables is determined. In the example of FIG. 6, sets of observables having a commutative exchange relationship are coupled by lines. Then, the partition 61 and 62 is generated based on the exchange relationship between the observables. The exchange relationship is commutative in all sets of observables

belonging to the partition 61. Similarly, the exchange relationship is commutative in all sets of observables belonging to partition 62.

Although two partitions 61 and 62 are generated in the example of FIG. 6, a number of partitions to be generated varies depending on the partitioning algorithm.

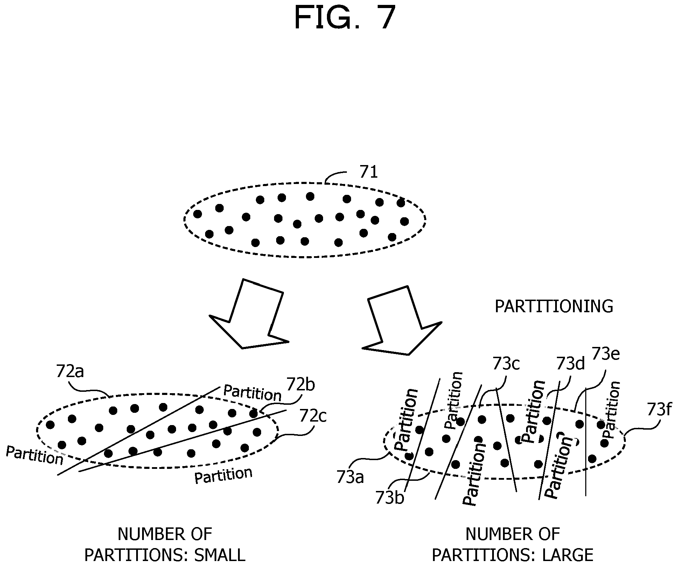

FIG. 7 is a diagram illustrating an example of partitioning. When each partition of the observable group 71 is classified into any one of a plurality of partitions, there are a plurality of ways of a division of the partition. For example, it can be divided into three partitions 72a to 72c. Further, it is also possible to divide into six partitions 73a to 73f.

The smaller the number of partitions is, the more efficiently the observable can be measured. For example, when the number of partitions is small, the number of observables belonging to one partition becomes large. As the number of observables belonging to one partition increases, it becomes easier to create a set of observables for simultaneous measurement, and the processing for measuring all the observables becomes more efficient.

Therefore, in the second embodiment, the classical computer 100 performs partitioning of the observable group so as to reduce the number of partitions. At this time, the classical computer 100 realizes the partitioning in a short time by using the annealing-type computer 200.

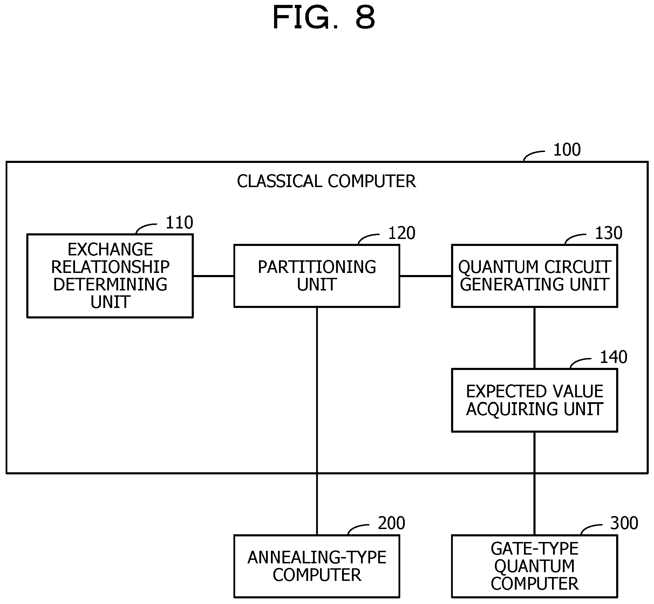

FIG. 8 is a block diagram illustrating an example of a function of a classical computer. The classical computer 100 includes an exchange relationship determining unit 110, a partitioning unit 120, a quantum circuit generating unit 130, and an expected value acquiring unit 140.

The exchange relationship determining unit 110 determines the exchange relationship for all sets of observables to be measured.

The partitioning unit 120 partitions the observable group based on the exchange relationship between the observables. The partitioning unit 120 performs partitioning using, for example, the annealing-type computer 200. When the annealing-type computer 200 is used, the partitioning unit 120 creates an Ising model in which the energy decreases as the number of observables included in a partition increases. Then, the partitioning unit 120 instructs the annealing-type computer 200 to search for the ground state of the created Ising model. Then, information of the observable belonging to the partition is returned from the annealing-type computer 200.

The quantum circuit generating unit 130 generates a quantum circuit for measuring an observable. For example, the quantum circuit generating unit 130 selects a predetermined number of observables to be simultaneously measured from the same partition and generates a quantum circuit corresponding to a set of the selected observables.

The expected value acquiring unit 140 controls the gate-type quantum computer 300 to measure an observable using the generated quantum circuit.

Further, the function of each element in the classical computer 100 illustrated in FIG. 8 can be realized by causing a computer to execute a program module corresponding to the element, for example.

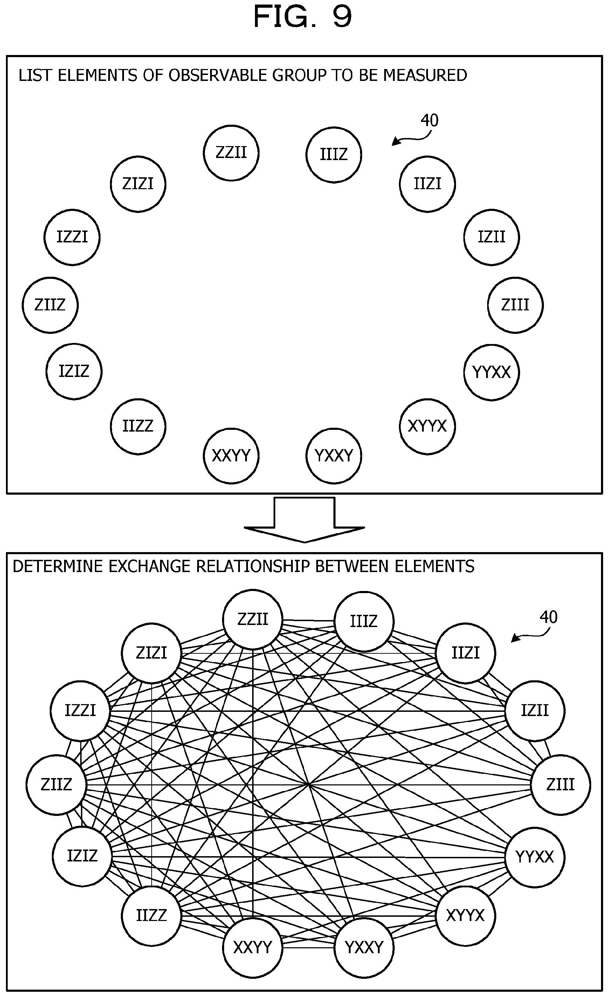

Next, a procedure for measuring an expected value of an observable will be described with reference to FIGS. 9 to 12.

FIG. 9 is a diagram illustrating an example of processing performed by an exchange relationship determining unit. The exchange relationship determining unit 110 lists the observables that are elements of the observable group 40 to be measured. The observable is represented by the Pauli character string (tensor product of Pauli operators). The exchange relationship determining unit 110 determines an exchange relationship for all sets obtained by selecting two observables from the observable group 40. The exchange relationship determining unit 110 stores information for associating the set of observables determined to be commutative. In the example of FIG. 9, the set of observables determined to be commutative are coupled by lines. The exchange relationship between observables that are not coupled by lines is anti-commutative.

When the exchange relation determining unit 110 completes the determination of the exchange relationship, the partitioning unit 120 performs the partitioning. The partitioning unit 120 repeats the process of generating a partition including as many observables as possible, for example.

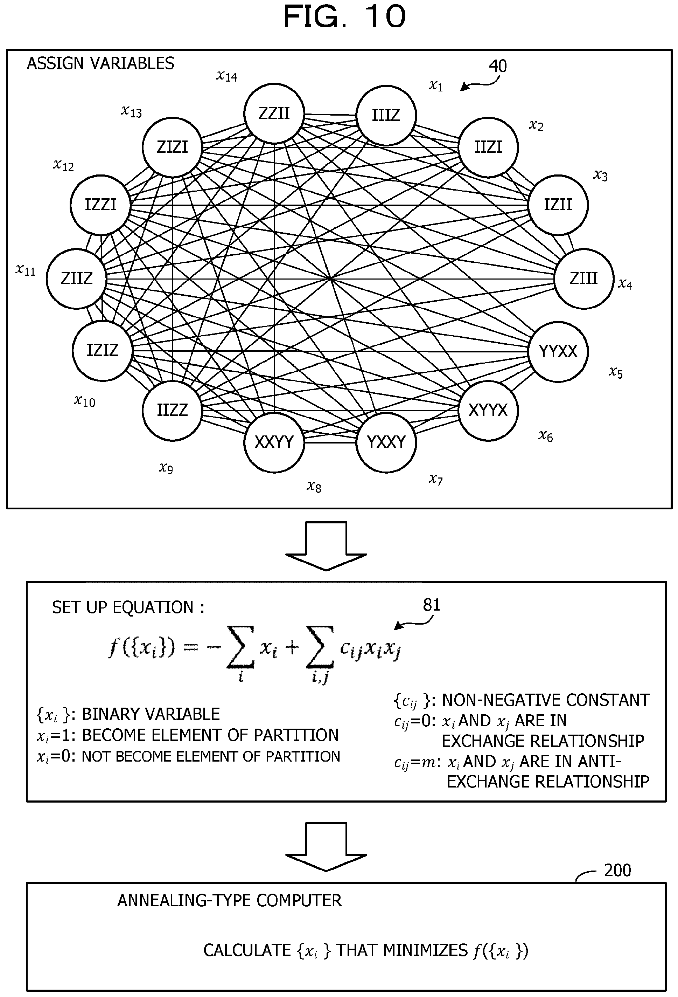

FIG. 10 is a diagram illustrating an example of partition generation processing. The partitioning unit 120 assigns variables $\{x_i\} = \{x_1, \ldots, x_{14}\}$ to each of the 14 observables in the observable group 40. $\{x_i\}$ is a binary variable. "$x_i = 1$" indicates that it becomes an element of a partition. "$x_i = 0$" indicates that it is not an element of a partition.

The partitioning unit 120 generates the Ising model 81 using $\{x_i\}$. The Ising model 81 is represented by the following equation.

[Equation 1]

$$f(\{x_i\}) = -\sum_{i} x_i + \sum_{i,j} c_{ij} x_i x_j \qquad (1)$$

$f(\{x_i\}$ in equation (1) corresponds to the Hamiltonian. The value of the first term on the right side decreases as the

number of i satisfying $x_i = 1$ increases. $\{c_{ij}\}$ in the second term of the right side is a non-negative constant representing an exchange relationship. When the i-th observable and the j-th observable are in the exchange relationship, $c_{ij} = 0$ is established. When the i-th observable and the j-th observable are in an anti-exchange relationship, $c_{ij} = m$ (m is a positive real number) is established.

If the value of m is too small, the probability that the partition will contain a set of observables in the anti-exchange relationship increases. A lower limit of m depends on the number of observables of interest. For example, when the number of observables is about "10", the lower limit of m is about "0.25". When the number of observables is about "5000", m can be reduced to about "0.05". When the value of m is increased, the convergence of the solution becomes fast in the solution search. However, when m is excessively increased, there is a concern that it may not be possible to escape from the local solution in the solution search of the Ising model 81. Therefore, when a priority is given to calculation accuracy, it is appropriate to set the value of m to a value close to the lower limit value.

As a result, the second term on the right side has a higher value as the number of sets of observables in the anti-exchange relationship included in the elements of the partition increases. When $f(\{x_i\})$ takes a minimum value in equation (1) of the Ising model 81, the second term on the right side is needed to be 0.

The partitioning unit 120 causes the annealing-type computer 200 to calculate $\{x_i\}$ that minimizes $f(\{x_i\})$. Equation (1) is a combinatorial optimization problem for finding a combination of values of $\{x_i\}$ that minimizes $f(\{x_i\})$, and a calculation can be performed at high speed by using the annealing-type computer 200.

Note that the partitioning unit 120 may increase the value of m and cause the annealing-type computer 200 to perform recalculation when the combination of $x_i = 1$ obtained as the solution of the Ising model 81 includes an anti-exchange relationship.

After creating one partition from the observable group $A_0$, the partitioning unit 120 sets a constituting the created partition as $B_0$. The partitioning unit 120 creates another partition from an observable group $A_1 = A_0 ¥ B_0$ (¥ indicates a difference set) obtained by removing elements of $B_0$ from $A_0$, and sets a partial group constituting the created partition as $B_1$. The partitioning unit 120 creates another partition from the observable group $A_2 = A_1 ¥ B_1$ obtained by removing the elements of $B_1$ from $A_1$, and sets the partial group constituting the partition as $B_2$. In this way, the partitioning unit 120 repeatedly executes the partition creation processing on the partial group having the observable not included in any partition as an element. When the observable group $A_{n+1} = A_n ¥ B_n$ obtained by removing the element of $B_n$ from $A_n$ becomes a 0 set, the partitioning unit 120 ends the partitioning.

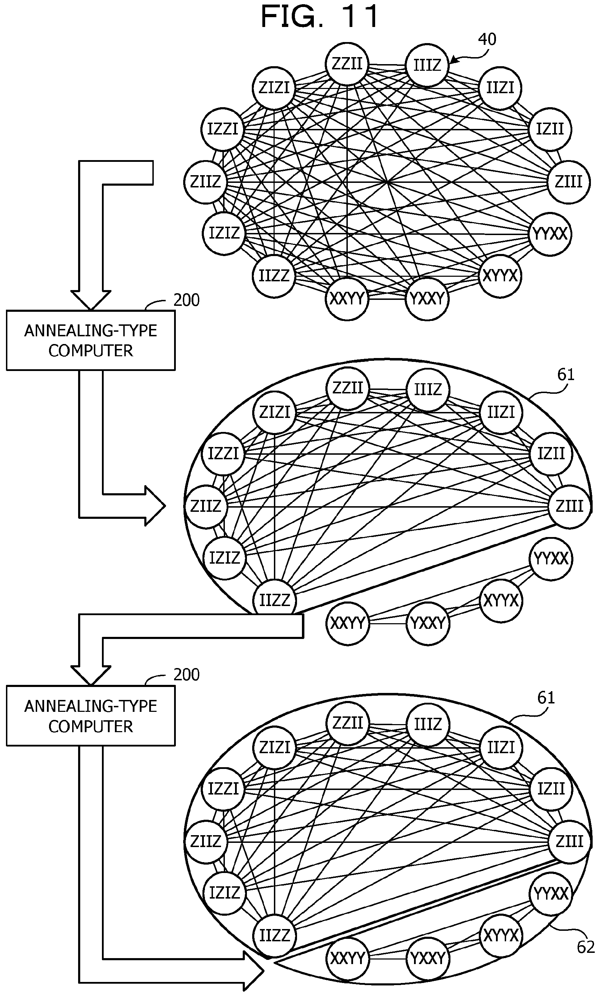

FIG. 11 is a diagram illustrating an example of a process of repeating partition generation. First, with all the observables of the observable group 40 as elements, the annealing-type computer 200 is caused to generate the partition 61 having the maximum number of elements based on the Ising model 81. For example, $\{x_1, . . . , x_{14}\}$ that minimizes $f(\{x_i\})$ of the Ising model 81 is responded from the annealing-type computer 200. The observables corresponding to the elements whose values are 1 in the responded $\{x_1, ..., x_{14}\}$ are the observables included in the partition 61.

The partitioning unit 120 instructs the annealing-type computer 200 to generate a partition based on a partial group having an observable not included in the partition 61 as an element. In accordance with the instruction from the partitioning unit 120, the annealing-type computer 200 generates a partition 62 having the largest number of elements.

In the example of FIG. 11, since all the observables are included in any one of the two partitions 61 and 62, the partitioning ends after the partition 62 is generated.

When the partitioning is completed, the quantum circuit generating unit 130 generates a quantum circuit for measuring the complete state of the quantum bit. Then, the expected value acquiring unit 140 controls the gate-type quantum computer 300 to acquire the expected value of the observable based on the generated quantum circuit.

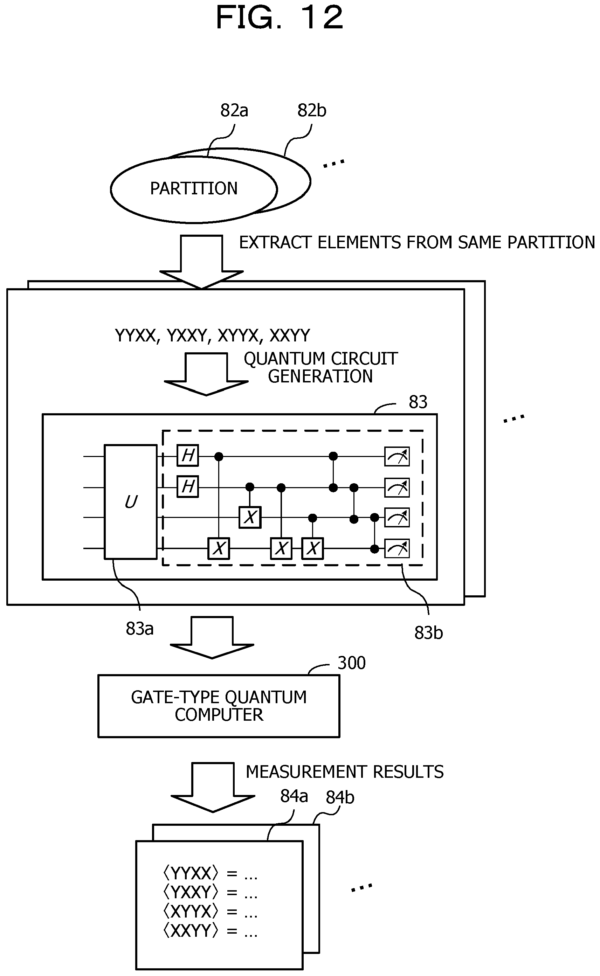

FIG. 12 is a diagram illustrating an example of measurement of an expected value of an observable using a quantum circuit for simultaneous measurement. The quantum circuit generating unit 130 extracts elements corresponding to observables to be simultaneously measured from one of the plurality of partitions 82a, 82b, ⋯. In the example of FIG. 12, the gate-type quantum computer 300 can perform the simultaneous measurement with four quantum bits. In this case, the quantum circuit generating unit 130 extracts a set of four elements from each partition. Then, the quantum circuit generating unit 130 generates a quantum circuit for each set of the extracted elements. For example, when "YYXX, YXXY, XYYX, XXYY" is extracted, the quantum circuit 83 is generated.

The generated quantum circuit 83 has a configuration in which a measurement quantum circuit 83b for performing an operation for the simultaneous measurement of a plurality of observables is added to the output-side of a unitary gate 83a for performing an operation corresponding to a problem to be solved. The measurement quantum circuit 83b is registered in advance in the quantum circuit generating unit 130 in association with, for example, a set of observables to be measured. For example, the quantum circuit generating unit 130 stores the quantum circuit for simultaneously measuring the expected values of the observables indicated in the set pattern, in association with the set pattern of the observables. Then, the quantum circuit generating unit 130 extracts a quantum circuit corresponding to the set of the observables indicated by the elements extracted from the partition, from a quantum circuit group registered in advance. The quantum-circuit generating unit 130 generates the quantum circuit 83 to be input to the gate-type quantum computer 300 by coupling the measurement quantum circuit 83b corresponding to the set of observables to the output-side

of the unitary gate 83a corresponding to the problem to be solved.

The expected value acquiring unit 140 transmits the quantum circuit generated for each set of observables to the gate-type quantum computer 300. The gate-type quantum computer 300 measures the expected value of the observable according to the received quantum circuit. For example, the gate-type quantum computer 300 repeats the measurement of the state of each quantum bit using the received quantum circuit a plurality of times. Then, the gate-type quantum computer 300 calculates the expected value of a corresponding observable based on a plurality of measurement results of the state of each quantum bit.

The gate-type quantum computer 300 transmits the input measurement results 84a, 84b,. of the respective quantum circuits to the classical computer 100. Each of the measurement results 84a, 84b,. indicates the expected value of the state of each quantum bit of the corresponding quantum circuit (the expected value of the observable corresponding to the quantum bit). The expected-value acquiring unit 140 sets the expected values of the quantum bits indicated in the measurement results 84a, 84b,. as the expected values of the observables corresponding to the quantum bits of the quantum circuit used for the calculation. By obtaining the expected values of all the observables, the density operator $\rho$ indicating the complete state (the states of the X-axis, the Y-axis, and the Z-axis) of the output of the unitary gate 83a corresponding to the problem to be solved is obtained. Then, the expected value acquiring unit 140 outputs the solution of the problem to be solved obtained based on the density operator $\rho$ as a calculation result.

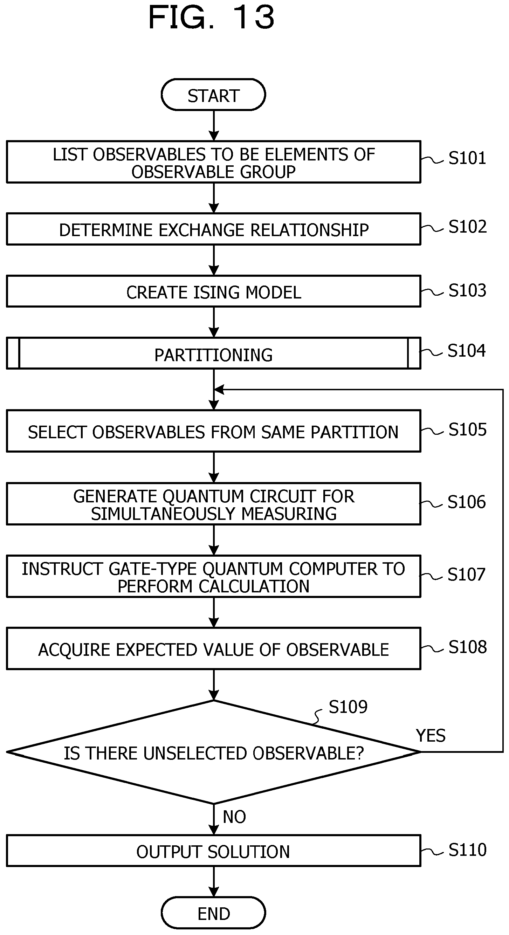

Next, a procedure of observable measurement will be described in detail with reference to FIGS. 13 to 15.

FIG. 13 is a flowchart illustrating an example of an observable measurement procedure. Hereinafter, the process illustrated in FIG. 13 will be described in order of step number.

[Step S101] The exchange relationship determining unit 110 lists the observables to be elements of the observable group in accordance with the problem to be solved.

[Step S102] The exchange relationship determining unit 110 determines the exchange relationship between the observables included as the elements in the observable group. For example, the exchange relationship determining unit 110 generates all sets (pairs of observables) obtained by selecting two observables included as the elements of the observable group. Then, the exchange relationship determining unit 110 determines, for each pair of observables, whether the pair of observables is commutative or anti-commutative based on the commutative/anti-commutative relationship between the Pauli operators included in the respective observables.

[Step S103] The exchange relationship determining unit 110 creates an Ising model in which the value of the Hamiltonian decreases as the number of observables included in a partition increases.

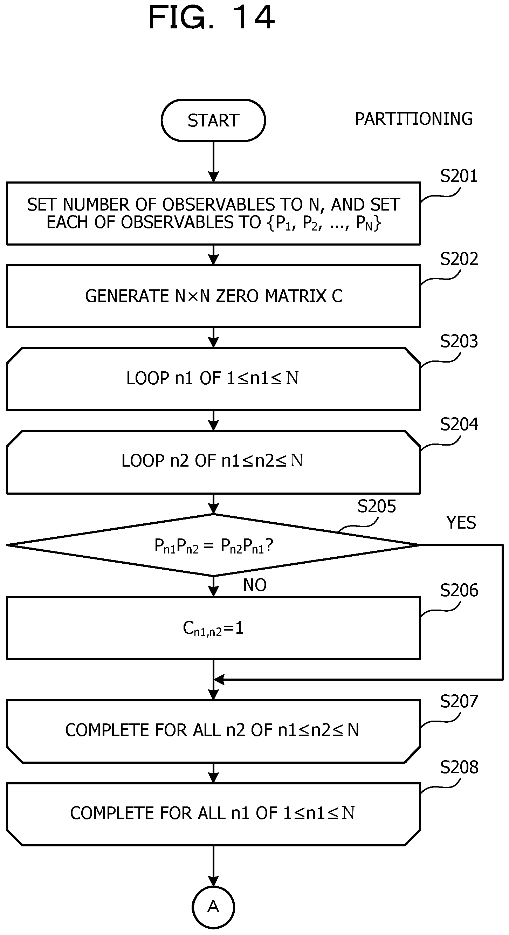

[Step S104] The partitioning unit 120 partitions the observable group. Partitioning creates one or more partitions. The partitioning process will be described in detail later (see FIG. 14).

[Step S105] The quantum circuit generating unit 130 selects a predetermined number of observables for which expected values have not been calculated from the same partition.

[Step S106] The quantum circuit generating unit 130 generates a quantum circuit for simultaneously measuring the selected plurality of observables.

[Step S107] The expected value acquiring unit 140 transmits the quantum circuit to the gate-type quantum computer 300 and instructs the gate-type quantum computer 300 to perform calculation in accordance with the quantum circuit. The gate-type quantum computer 300 repeats the calculation according to the quantum circuit a predetermined number of times, and calculates the expected value of the value of the quantum bit corresponding to each of the selected observables. The gate-type quantum computer 300 transmits the obtained expected value to the expected value acquiring unit 140.

[Step S108] The expected value acquiring unit 140 acquires the expected value of the observable from the gate-type quantum computer 300.

[Step S109] The quantum circuit generating unit 130 determines whether or not there is an unselected observable. If there is an unselected observable, the quantum circuit generating unit 130 advances the process to step S105. Further, when all the observables have been selected, the quantum circuit generating unit 130 advances the process to step S109.

[Step S110] The expected value acquiring unit 140 obtains a solution of the problem to be solved based on the expected value of the observable to be measured, and outputs the obtained solution.

In this way, the partitions in which the observables that can be measured simultaneously are collected are generated by performing the partitioning, and the expected values of the observables included in the same partition are measured simultaneously.

Next, the partitioning process will be described in detail.

FIG. 14 is a flowchart (1/2) illustrating an example of a procedure of a partitioning process. Hereinafter, the process illustrated in FIG. 14 will be described in order of step number.

[Step S201] The partitioning unit 120 sets the number of observables to N (N is a natural number), and sets each of the observables to $\{P_1, P_2, ..., P_N\}$. Each observable is represented by the Pauli character string.

[Step S202] The partitioning unit 120 generates an N x N square matrix C in which the values of all elements are

"0".

[Step S203] The partitioning unit 120 counts up the loop variable n1 from 1 by 1, and repeats the processing of steps S204 to S207 until the loop variable nlbecomes N.

[Step S204] The partitioning unit 120 counts up the loop variable n2 by one from n1, and repeats the processing of steps S205 to S206 until the loop variable n2 reaches N.

[Step S205] The partitioning unit 120 determines whether a pair of the n1-th observable $P_{n1}$ and the n2-th observable $P_{n2}$ is commutative ($P_{n1}P_{n2} = P_{n2}P_{n1}$) or anti-commutative ($P_{n1}P_{n2} = - P_{n2}P_{n1}$). If it is commutative, the partitioning unit 120 advances the process to step S207. On the other hand, the partitioning unit 120 advances the process to step S206 if it is anti-commutative.

[Step S206] The partitioning unit 120 changes the values of the element $C_{n1,n2}$ in the n1 row and n2 column of the square matrix C to "1" ($C_{n1, n2} = 1$). In this way, the value of the element corresponding to the pair of anti-commutative observables is changed to "1", and the value of the element corresponding to the pair of commutative observables is maintained at "0".

[Step S207] When the processing of steps S205 to S206 is completed for all the n2 from n1 to N, the partitioning unit 120 advances the process to step S208.

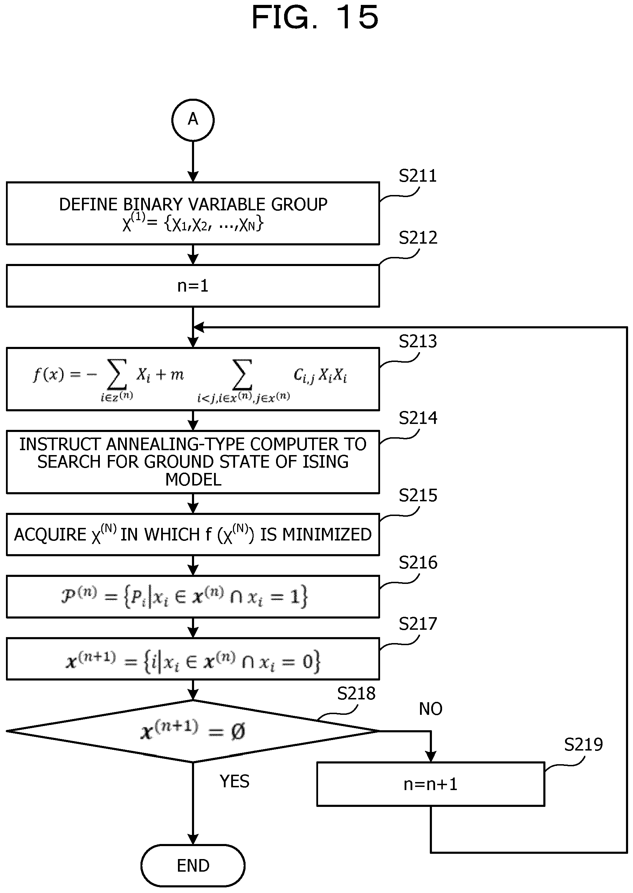

[Step S208] When the processing of steps S204 to S207 is completed for all the n1 from 1 to N, the partitioning unit 120 advances the process to step S211 (see FIG. 15).

FIG. 15 is a flowchart (2/2) illustrating an example of a procedure of the partitioning process. Hereinafter, the process illustrated in FIG. 15 will be described in order of step number.

[Step S211] The partitioning unit 120 defines a binary variable group $\mathbf{x}^{(1)} = \{x_1, x_2, \ldots, x_N\}$.

[Step S212] The partitioning unit 120 sets a loop variable n to an initial value "1" (n = 1).

[Step S213] The partitioning unit 120 generates an Ising model. The Ising model is expressed by the following equation.

[Equation 2]

$$f(\boldsymbol{x}) = -\sum_{i \in \boldsymbol{x}^{(n)}} x_i + m \sum_{i<j, i \in \boldsymbol{x}^{(n)}, j \in \boldsymbol{x}^{(n)}} C_{i,j}\, x_i x_j \qquad (2)$$

m in Equation (2) is a positive real number.

[Step S214] The partitioning unit 120 transmits the Ising model to the annealing-type computer 200 and instructs the annealing-type computer 200 to search for the ground state of the Ising model. In accordance with the instruction, the annealing-type computer 200 generates a binary variable group $x^{(n)}$ in which $f(x^{(n)})$ in the Ising model is minimized.

[Step S215] The partitioning unit 120 acquires the binary variable group $x^{(n)}$ in which $f(x^{(n)})$ is minimized from the annealing-type computer 200.

[Step S216] The partitioning unit 120 defines a set $P^{(n)}$ of observables included in a partition as follows.

[Equation 3]

$$\mathcal{P}^{(n)} = \left\{P_i \middle| x_i \in \boldsymbol{x}^{(n)} \cap x_i = 1\right\} \qquad (3)$$

The set $P^{(n)}$ includes an observable corresponding to a variable whose value is "1" in the binary variable group $x^{(n)}$ in which $f(x^{(n)})$ is minimized.

[Step S217] The partitioning unit 120 defines $x^{(n+1)}$ as illustrated in the following equation (4).

[Equation 4]

$$\boldsymbol{x}^{(n+1)} = \left\{i \middle| x_i \in \boldsymbol{x}^{(n)} \cap x_i = 0\right\} \qquad (4)$$

$x^{(n+1)}$ includes a variable whose value is "0" in the binary variable group $x^{(n)}$ in which $f(x^{(n)})$ is minimized.

[Step S218] The partitioning unit 120 determines whether $x^{(n+1)}$ is an empty set. If $x^{(n+1)}$ is the empty set, the partitioning unit 120 ends the partitioning process. If $x^{(n+1)}$ is not the empty set, the partitioning unit 120 advances the process to step S217.

[Step S219] The partitioning unit 120 counts up the value of n (n=n + 1), and advances the processing to step S213.

In this way, partitions containing as many observables as possible are repeatedly generated based on the

observables not contained in any partition. As a result, the number of partitions to be generated can be reduced. In addition, the partitions can be created at high speed using the annealing-type computer 200.

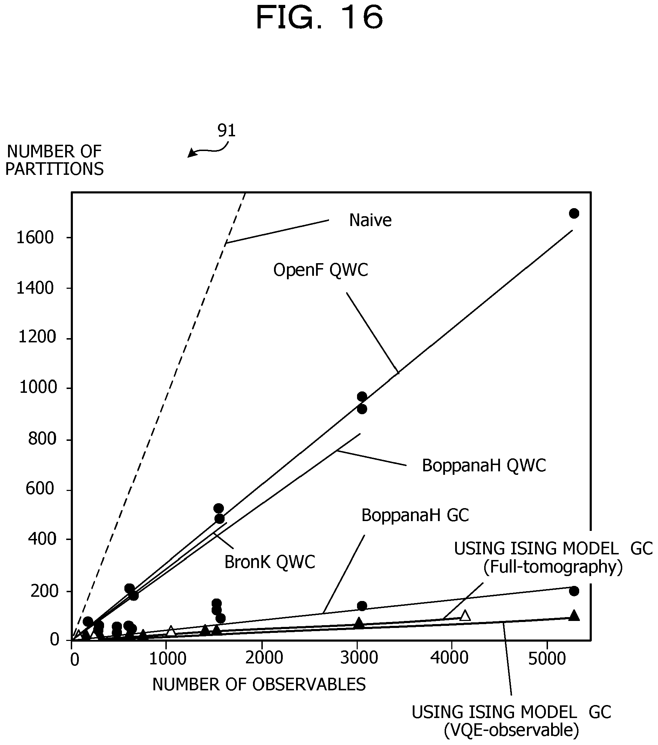

FIG. 16 is a diagram illustrating a comparison result of the number of partitions for each partitioning scheme. A graph 91 in FIG. 16 represents the relationship between the number of observables and the number of partitions for each partitioning scheme. In the graph 91, the horizontal axis represents the number of observables and the vertical axis represents the number of partitions.

"BronK QWC", "BoppanaH QWC", "BoppanaH GC", and "OpenF QWC" are calculation schemes that perform partitioning without using the Ising model. "BronK" and "BoppanaH" are abbreviations for the Bron-Kerbosch algorithm and the Boppana-Halldorsson algorithm, respectively. "OpenF" is an abbreviation for a scheme using Open Fermion which is a package of PYTHON®. QWC (Qubit-Wise Permutation) has a condition that all are commutative in comparisons of the set of elements (e. g. , $I_0Z_0$, $Y_1Z_1$, $X_2Z_2$ in FIG. 5) for the observables to be commutative. In GC (General Commutation), as illustrated in FIG. 5, if the number of sets of anti-commutative elements is even, the observables are commutative. Further, "Native" is a line representing the number of partitions when one observable is regarded as one partition (when the number of partitions is maximum).

"GC (Full-tomography) using Ising model" and "GC (VQE-observable) using Ising model" are partitioning schemes by the partitioning unit 120 illustrated in the second embodiment. "Full-tomography" in "GC using an Ising model" is an example of a case where measurement of all observables for completely knowing a quantum state is performed. "VQE-observable" is an example of a case in which the partitioning is performed on an observable used for calculation of a variational quantum Eigensolver (VQE).

As illustrated in FIG. 16, in the method that does not use the Ising model, the "BoppanaH GC" can minimize the number of partitions. On the other hand, when the Ising model is used, the number of partitions can be about half of the number of "BoppanaH GC" when compared with the same number of observables.

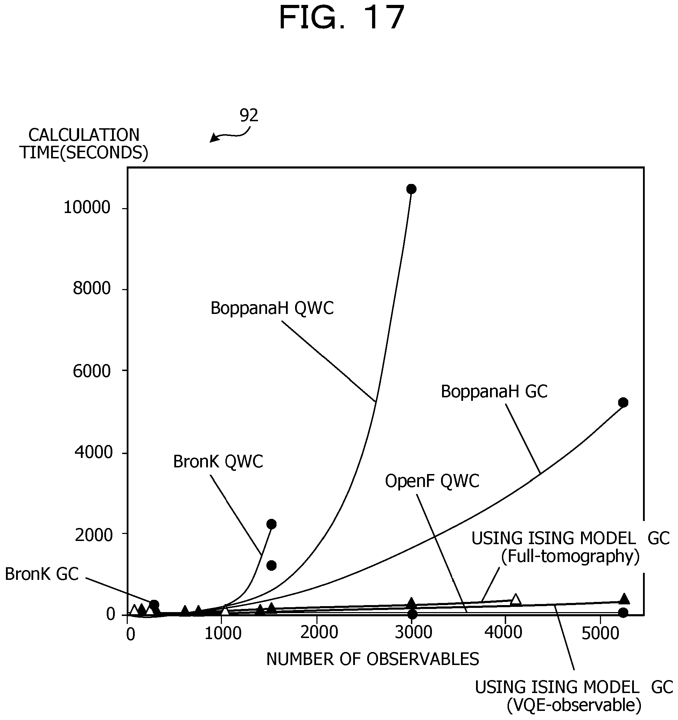

FIG. 17 is a diagram illustrating a comparison result of calculation time for each partitioning scheme. A graph 92 in FIG. 17 represents the relationship between the number of observables and the calculation time for each partitioning scheme. In the graph 92, the horizontal axis represents the number of observables, and the vertical axis represents the calculation time for partitioning.

Referring to FIG. 17, in "Boppanal GC", when the number of observables is about 5000, it takes about 5000 seconds for the partitioning. For example, in "BoppanaH GC", it takes 5000 seconds to divide the observables into about 200 partitions. On the other hand, in the partitioning using the Ising model, the calculation time is greatly reduced (to 1/10 or less) by searching for the ground state of the Ising model using the annealing-type computer 200.

DESCRIPTION OF SYMBOLS [0119]

1 Annealing-type computer
2 Observable group
3 Ising model
4 First partition
5 Second partition
10 Information processing apparatus
11 Storage unit
12 Processing unit

## Claims

**1.** A method for partitioning a plurality of observables of a plurality of quantum bits and causing, when executed by a classical computer (100) which is coupled to an annealing-type computer (200) and a gate-type quantum computer (300), the classical computer (100) to execute a process, the process comprising:

determining whether a simultaneous measurement of expected values is possible for each set of two observables among the plurality of observables representing states of the plurality of quantum bits;
generating an Ising model (3) which includes a variable indicating whether each of the plurality of observables is included in a first partition that is a subset of the plurality of observables is included, a value of a Hamiltonian increases when a set of observables that are not measured simultaneously is included in the first partition and the value of the Hamiltonian decreases as a number of observables included in the first partition increases;
generating the first partition including one or more observables based on a value of the variable corresponding to

each of the plurality of observables obtained by searching for a ground state of the Ising model;
selecting a predetermined number of target observables from the first partition;
generating a quantum circuit (34) which simultaneously measures expected values of the target observables and corresponds to a part of the plurality of quantum bits; and
instructing the gate-type quantum computer to simultaneously measure the expected values of the target observables based on the quantum circuit,
wherein the generating the first partition includes: instructing the annealing-type computer to search for the ground state of the Ising model; and acquiring, from the annealing-type computer, the variable of each of the plurality of observables as a search result of the Ising model.

**2.** The method according to claim 1, further comprising:

setting a variable for the Ising model to a variable corresponding to remaining observables which are not included in the first partition and are obtained by the searching for the ground state of the Ising model; and
generating a second partition including one or more remaining observables based on the variable corresponding to the remaining observables.

**3.** The method according to claim 2, wherein the generating the second partition is repeated until there is no observable that is not included in the first partition or the generated second partition.

**4.** A partitioning program for partitioning a plurality of observables of a plurality of quantum bits and for causing, when executed by a classical computer (100) which is coupled to an annealing-type computer (200) and a gate-type quantum computer (300), the classical computer (100) to execute a process, the process comprising:

determining whether a simultaneous measurement of expected values is possible for each set of two observables among the plurality of observables representing states of the plurality of quantum bits;
generating an Ising model (3) which includes a variable indicating whether each of the plurality of observables is included in a first partition that is a subset of the plurality of observables is included, a value of a Hamiltonian increases when a set of observables that are not measured simultaneously is included in the first partition and the value of the Hamiltonian decreases as a number of observables included in the first partition increases;
generating the first partition including one or more observables based on a value of the variable corresponding to each of the plurality of observables obtained by searching for a ground state of the Ising model;
selecting a predetermined number of target observables from the first partition;
generating a quantum circuit (34) which simultaneously measures expected values of the target observables and corresponds to a part of the plurality of quantum bits; and
instructing the gate-type quantum computer to simultaneously measure the expected values of the target observables based on the quantum circuit,
wherein the generating the first partition includes: instructing the annealing-type computer to search for the ground state of the Ising model; and acquiring, from the annealing-type computer, the variable of each of the plurality of observables as a search result of the Ising model.

**5.** An information processing apparatus (100) coupled to an annealing-type computer (200) and a gate-type quantum computer (300), the information processing apparatus (100) comprising:

a processing unit (12) configured to:
determine whether a simultaneous measurement of expected values is possible for each set of two observables among a plurality of observables representing states of a plurality of quantum bits;
generate an Ising model (3) which includes a variable indicating whether each of the plurality of observables is included in a first partition that is a subset of the plurality of observables is included, a value of a Hamiltonian increases when a set of observables that are not measured simultaneously is included in the first partition and the value of the Hamiltonian decreases as a number of observables included in the first partition increases;
generate the first partition including one or more observables based on a value of the
variable corresponding to each of the plurality of observables obtained by searching for a ground state of the Ising model;
select a predetermined number of target observables from the first partition;
generate a quantum circuit (34) which simultaneously measures expected values of the target observables and corresponds to a part of the plurality of quantum bits; and
instruct the gate-type quantum computer to simultaneously measure the expected values of the target ob-

servables based on the quantum circuit,
wherein generating the first partition includes: instructing the annealing-type computer to search for the ground state of the Ising model; and acquiring, from the annealing-type computer, the variable of each of the plurality of observables as a search result of the Ising model.

**Patentansprüche**

**1.** Verfahren zum Partitionieren einer Vielzahl von Observables einer Vielzahl von Quantenbits und Veranlassen, dass beim Ausführen durch einen klassischen Computer (100), der mit einem Annealing-Computer (200) und einem Gate-Quantencomputer (300) gekoppelt ist, der klassische Computer (100) einen Vorgang ausführt, wobei der Vorgang Folgendes umfasst:

Bestimmen, ob eine gleichzeitige Messung von Erwartungswerten für jeden Satz von zwei Observables aus der Vielzahl von Observables, die Zustände der Vielzahl von Quantenbits darstellen, möglich ist;
Erzeugen eines Ising-Modells (3), das eine Variable beinhaltet, die angibt, ob jedes der Vielzahl von Observables in einer ersten Partition, die eine Teilmenge der Vielzahl von Observables ist, beinhaltet ist, ein Wert eines Hamiltonians steigt, wenn ein Satz von Observables, die nicht gleichzeitig gemessen werden, in der ersten Partition beinhaltet sind, und der Wert des Hamiltonians sinkt, wenn eine Anzahl von in der ersten Partition beinhalteten Observables zunimmt;
Erzeugen der ersten Partition, die eine oder mehrere Observables beinhaltet, basierend auf einem Wert der Variable, die jeder der Vielzahl von Observables entspricht, die durch Suchen nach einem Grundzustand des Ising-Modells ermittelt wird;
Auswählen einer vorbestimmten Anzahl von Zielobservables aus der ersten Partition;
Erzeugen einer Quantenschaltung (34), die gleichzeitig Erwartungswerte der Zielobservables misst und einem Teil der Vielzahl von Quantenbits entspricht; und
Anweisen des Gate-Quantencomputers, die Erwartungswerte der Zielobservables basierend auf der Quantenschaltung gleichzeitig zu messen,
wobei das Erzeugen der ersten Partition Folgendes beinhaltet: Anweisen des Annealing-Computers, nach dem Grundzustand des Ising-Modells zu suchen; und Abrufen der Variable jeder der Vielzahl von Observables von dem Annealing-Computer als ein Suchergebnis des Ising-Modells.

**2.** Verfahren nach Anspruch 1, ferner umfassend:

Einstellen einer Variable für das Ising-Modells auf eine Variable, die verbleibenden Observables, die nicht in der ersten Partition beinhaltet sind und durch das Suchen nach dem Grundzustand des Ising-Modells erhalten werden, entspricht; und
Erzeugen einer zweiten Partition, die eine oder mehrere verbleibende Observables beinhaltet, basierend auf der Variable, die den verbleibenden Observables entspricht.

**3.** Verfahren nach Anspruch 2, wobei das Erzeugen der zweiten Partition wiederholt wird, bis es keine Observable mehr gibt, die weder in der ersten Partition noch in der erzeugten zweiten Partition beinhaltet ist.

**4.** Partitionierungsprogramm zum Partitionieren einer Vielzahl von Observables einer Vielzahl von Quantenbits und zum Veranlassen, dass beim Ausführen durch einen klassischen Computer (100), der mit einem Annealing-Computer (200) und einem Gate-Quantencomputer (300) gekoppelt ist, der klassische Computer (100) einen Vorgang ausführt, wobei der Vorgang Folgendes umfasst:

Bestimmen, ob eine gleichzeitige Messung von Erwartungswerten für jeden Satz von zwei Observables aus der Vielzahl von Observables, die Zustände der Vielzahl von Quantenbits darstellen, möglich ist;
Erzeugen eines Ising-Modells (3), das eine Variable beinhaltet, die angibt, ob jedes der Vielzahl von Observables in einer ersten Partition, die eine Teilmenge der Vielzahl von Observables ist, beinhaltet ist, ein Wert eines Hamiltonians steigt, wenn ein Satz von Observables, die nicht gleichzeitig gemessen werden, in der ersten Partition beinhaltet sind, und der Wert des Hamiltonians sinkt, wenn eine Anzahl von in der ersten Partition beinhalteten Observables zunimmt;
Erzeugen der ersten Partition, die eine oder mehrere Observables beinhaltet, basierend auf einem Wert der Variable, die jeder der Vielzahl von Observables entspricht, die durch Suchen nach einem Grundzustand des Ising-Modells ermittelt wird;

Auswählen einer vorbestimmten Anzahl von Zielobservables aus der ersten Partition;
Erzeugen einer Quantenschaltung (34), die gleichzeitig Erwartungswerte der Zielobservables misst und einem Teil der Vielzahl von Quantenbits entspricht; und
Anweisen des Gate-Quantencomputers, die Erwartungswerte der Zielobservables basierend auf der Quantenschaltung gleichzeitig zu messen,
wobei das Erzeugen der ersten Partition Folgendes beinhaltet: Anweisen des Annealing-Computers, nach dem Grundzustand des Ising-Modells zu suchen; und Abrufen der Variable jeder der Vielzahl von Observables von dem Annealing-Computer als ein Suchergebnis des Ising-Modells.

**5.** Informationsverarbeitungseinrichtung (100), die mit einem Annealing-Computer (200) und einem Gate-Quantencomputer (300) gekoppelt ist, wobei die Informationsverarbeitungseinrichtung (100) Folgendes umfasst:
eine Verarbeitungseinheit (12), die zu Folgendem konfiguriert ist:

Bestimmen, ob eine gleichzeitige Messung von Erwartungswerten für jeden Satz von zwei Observables aus einer Vielzahl von Observables, die Zustände einer Vielzahl von Quantenbits darstellen, möglich ist;
Erzeugen eines Ising-Modells (3), das eine Variable beinhaltet, die angibt, ob jedes der Vielzahl von Observables in einer ersten Partition, die eine Teilmenge der Vielzahl von Observables ist, beinhaltet ist, ein Wert eines Hamiltonians steigt, wenn ein Satz von Observables, die nicht gleichzeitig gemessen werden, in der ersten Partition beinhaltet sind, und der Wert des Hamiltonians sinkt, wenn eine Anzahl von in der ersten Partition beinhalteten Observables zunimmt;
Erzeugen der ersten Partition, die eine oder mehrere Observables beinhaltet, basierend auf einem Wert der Variable, die jeder der Vielzahl von Observables entspricht, die durch Suchen nach einem Grundzustand des Ising-Modells erhalten wird;
Auswählen einer vorbestimmten Anzahl von Zielobservables aus der ersten Partition;
Erzeugen einer Quantenschaltung (34), die gleichzeitig Erwartungswerte der Zielobservables misst und einem Teil der Vielzahl von Quantenbits entspricht; und
Anweisen des Gate-Quantencomputers, die Erwartungswerte der Zielobservables basierend auf der Quantenschaltung gleichzeitig zu messen,
wobei das Erzeugen der ersten Partition Folgendes beinhaltet: Anweisen des Annealing-Computers, nach dem Grundzustand des Ising-Modells zu suchen; und Abrufen der Variable jeder der Vielzahl von Observables von dem Annealing-Computer als ein Suchergebnis des Ising-Modells.

## Revendications

**1.** Procédé de partitionnement d'une pluralité d'observables d'une pluralité de bits quantiques et le fait d'amener, lorsqu'il est exécuté par un ordinateur classique (100) couplé à un ordinateur de type recuit (200) et à un ordinateur quantique de type porte (300), l'ordinateur classique (100) à exécuter un processus, le processus comprenant :

le fait de déterminer si une mesure simultanée des valeurs attendues est possible pour chaque ensemble de deux observables parmi la pluralité d'observables représentant les états de la pluralité de bits quantiques ;
la génération d'un modèle d'Ising (3) qui comporte une variable indiquant si chacune de la pluralité d'observables est incluse dans une première partition qui est un sous-ensemble de la pluralité d'observables est inclus, une valeur d'un hamiltonien augmente lorsqu'un ensemble d'observables qui ne sont pas mesurées simultanément est inclus dans la première partition et la valeur de l'hamiltonien diminue à mesure qu'un nombre d'observables incluses dans la première partition augmente ;
la génération de la première partition comportant une ou plusieurs observables sur la base d'une valeur de la variable correspondant à chacune de la pluralité d'observables obtenues en recherchant un état fondamental du modèle d'Ising ;
la sélection d'un nombre prédéterminé d'observables cibles à partir de la première partition ;
la génération d'un circuit quantique (34) qui mesure simultanément les valeurs attendues des observables cibles et correspond à une partie de la pluralité de bits quantiques ; et
le fait d'ordonner à l'ordinateur quantique de type porte de mesurer simultanément les valeurs attendues des observables cibles sur la base du circuit quantique,
dans lequel la génération de la première partition comporte : le fait d'ordonner à l'ordinateur de type recuit de rechercher l'état fondamental du modèle d'Ising ; et l'acquisition, à partir de l'ordinateur de type recuit, de la variable de chacune de la pluralité d'observables comme résultat de recherche du modèle d'Ising.

**2.** Procédé selon la revendication 1, comprenant en outre :

la définition d'une variable pour le modèle d'Ising correspondant aux observables restantes qui ne sont pas incluses dans la première partition et qui sont obtenues par la recherche de l'état fondamental du modèle d'Ising ; et
la génération d'une deuxième partition comportant une ou plusieurs observables restantes sur la base de la variable correspondant aux observables restantes.

**3.** Procédé selon la revendication 2, dans lequel la génération de la seconde partition est répétée jusqu'à ce qu'il n'y ait plus d'observable qui ne soit pas inclus dans la première partition ou dans la seconde partition générée.

**4.** Programme de partitionnement pour le partitionnement d'une pluralité d'observables d'une pluralité de bits quantiques et le fait d'amener, lorsqu'il est exécuté par un ordinateur classique (100) couplé à un ordinateur de type recuit (200) et à un ordinateur quantique de type porte (300), l'ordinateur classique (100) à exécuter un processus, le processus comprenant :

le fait de déterminer si une mesure simultanée des valeurs attendues est possible pour chaque ensemble de deux observables parmi la pluralité d'observables représentant les états de la pluralité de bits quantiques ;
la génération d'un modèle d'Ising (3) qui comporte une variable indiquant si chacune de la pluralité d'observables est incluse dans une première partition qui est un sous-ensemble de la pluralité d'observables est inclus, une valeur d'un hamiltonien augmente lorsqu'un ensemble d'observables qui ne sont pas mesurées simultanément est inclus dans la première partition et la valeur de l'hamiltonien diminue à mesure qu'un nombre d'observables incluses dans la première partition augmente ;
la génération de la première partition comportant une ou plusieurs observables sur la base d'une valeur de la variable correspondant à chacune de la pluralité d'observables obtenues en recherchant un état fondamental du modèle d'Ising ;
la sélection d'un nombre prédéterminé d'observables cibles à partir de la première partition ;
la génération d'un circuit quantique (34) qui mesure simultanément les valeurs attendues des observables cibles et correspond à une partie de la pluralité de bits quantiques ; et
le fait d'ordonner à l'ordinateur quantique de type porte de mesurer simultanément les valeurs attendues des observables cibles sur la base du circuit quantique,
dans lequel la génération de la première partition comporte : le fait d'ordonner à l'ordinateur de type recuit de rechercher l'état fondamental du modèle d'Ising ; et l'acquisition, à partir de l'ordinateur de type recuit, de la variable de chacune de la pluralité d'observables comme résultat de recherche du modèle d'Ising.

**5.** Appareil de traitement d'informations (100) couplé à un ordinateur de type recuit (200) et à un ordinateur quantique de type porte (300), l'appareil de traitement d'informations (100) comprenant :
une unité de traitement (12) configurée pour :

déterminer si une mesure simultanée des valeurs attendues est possible pour chaque ensemble de deux observables parmi la pluralité d'observables représentant les états d'une pluralité de bits quantiques ;
générer un modèle d'Ising (3) qui comporte une variable indiquant si chacune de la pluralité d'observables est incluse dans une première partition qui est un sous-ensemble de la pluralité d'observables est inclus, une valeur d'un hamiltonien augmente lorsqu'un ensemble d'observables qui ne sont pas mesurées simultanément est inclus dans la première partition et
la valeur de l'hamiltonien diminue à mesure qu'un nombre d'observables incluses dans la première partition augmente ;
générer la première partition comportant une ou plusieurs observables sur la base d'une valeur de la variable correspondant à chacune de la pluralité d'observables obtenues en recherchant un état fondamental du modèle d'Ising ;
sélectionner un nombre prédéterminé d'observables cibles à partir de la première partition ;
générer un circuit quantique (34) qui mesure simultanément les valeurs attendues des observables cibles et correspond à une partie de la pluralité de bits quantiques ; et
ordonner à l'ordinateur quantique de type porte de mesurer simultanément les valeurs attendues des observables cibles sur la base du circuit quantique,
dans lequel la génération de la première partition comporte : le fait d'ordonner à l'ordinateur de type recuit de rechercher l'état fondamental du modèle d'Ising ; et l'acquisition, à partir de l'ordinateur de type recuit, de la variable de chacune de la pluralité d'observables comme résultat de recherche du modèle d'Ising.

FIG. 1

10
INFORMATION PROCESSING APPARATUS
STORAGE UNIT
11
2
OBSERVABLE GROUP
12
PROCESSING UNIT
EXCHANGE RELATIONSHIP DETERMINATION
GENERATE ISING MODEL
3
$f(\{x_i\}) = -\sum_i x_i + \sum_{i,j} c_{ij} x_i x_j$
GENERATE PARTITION
4
5
1

FIG. 2

100
300
CLASSICAL COMPUTER
GATE-TYPE QUANTUM COMPUTER
200
ANNEALING-TYPE COMPUTER

FIG. 3

100
101
PROCESSOR
104
GPU
21
22
102
MEMORY
105
INPUT INTERFACE
23
103
STORAGE DEVICE
106
OPTICAL DRIVE DEVICE
24
108
NETWORK INTERFACE
107
DEVICE CONNECTION INTERFACE
25
109
26
27
20
NETWORK

# FIG. 4

30
|000⟩
U
|ψ⟩

MEASURE $I_0\, Y_1\, X_2$、$Z_0\, Z_1\, Z_2$、$X_0\, I_1\, X_2$

INDIVIDUAL MEASUREMENT
31
U
S
H
X
H
$I_0$
$Y_1$
$X_2$
32
U
H
H
$X_0$
$I_1$
$X_2$
33
U
$Z_0$
$Z_1$
$Z_2$

SIMULTANEOUS MEASUREMENT
34
U
H
S
H
H
H
$I_0\, Y_1\, X_2$
$Z_0\, Z_1\, Z_2$
$X_0\, I_1\, X_2$

FIG. 5

35

| | $I$ | $X$ | $Y$ | $Z$ |
|---|---|---|---|---|
| $I$ | + | + | + | + |
| $X$ | + | + | − | − |
| $Y$ | + | − | + | − |
| $Z$ | + | − | − | + |

+ : COMMUTATIVE
− : ANTI-COMMUTATIVE

COMPARE $I_0\ Y_1\ X_2$ WITH $Z_0\ Z_1\ Z_2$

$I_0\ Z_0 = Z_0\ I_0$ $\quad Y_1\ Z_1 = -Z_1\ Y_1$ $\quad X_2\ Z_2 = -Z_2\ X_2$

$(I_0\ Y_1\ X_2)(Z_0\ Z_1\ Z_2) = (Z_0\ Z_1\ Z_2)(I_0\ Y_1\ X_2)$

COMMUTATIVE

FIG. 6

ZZII
54
IIIZ
41
IIZI
42
IZII
43
ZIII
44
YYXX
45
XYYX
46
YXXY
47
XXYY
48
IIZZ
49
IZIZ
50
ZIIZ
51
IZZI
52
ZIZI
53
Partition #1
61
62
Partition #2

FIG. 7

71
PARTITIONING
72a
Partition
72b
72c
Partition
Partition
73c
73d
73e
73f
Partition
Partition
Partition
Partition
Partition
Partition
73a
73b
NUMBER OF PARTITIONS: SMALL
NUMBER OF PARTITIONS: LARGE

FIG. 8

100
CLASSICAL COMPUTER
110
EXCHANGE RELATIONSHIP DETERMINING UNIT
120
PARTITIONING UNIT
130
QUANTUM CIRCUIT GENERATING UNIT
140
EXPECTED VALUE ACQUIRING UNIT
200
ANNEALING-TYPE COMPUTER
300
GATE-TYPE QUANTUM COMPUTER

FIG. 9

LIST ELEMENTS OF OBSERVABLE GROUP TO BE MEASURED
40
ZZII
IIIZ
ZIZI
IIZI
IZZI
IZII
ZIIZ
ZIII
IZIZ
YYXX
IIZZ
XYYX
XXYY
YXXY

DETERMINE EXCHANGE RELATIONSHIP BETWEEN ELEMENTS
40
ZZII
IIIZ
ZIZI
IIZI
IZZI
IZII
ZIIZ
ZIII
IZIZ
YYXX
IIZZ
XYYX
XXYY
YXXY

# FIG. 10

ASSIGN VARIABLES
40
$x_1$ IIIZ
$x_2$ IIZI
$x_3$ IZII
$x_4$ ZIII
$x_5$ YYXX
$x_6$ XYYX
$x_7$ YXXY
$x_8$ XXYY
$x_9$ IIZZ
$x_{10}$ IZIZ
$x_{11}$ ZIIZ
$x_{12}$ IZZI
$x_{13}$ ZIZI
$x_{14}$ ZZII

SET UP EQUATION :

81

$$f(\{x_i\}) = -\sum_i x_i + \sum_{i,j} c_{ij} x_i x_j$$

$\{x_i\}$: BINARY VARIABLE
$x_i$=1: BECOME ELEMENT OF PARTITION
$x_i$=0: NOT BECOME ELEMENT OF PARTITION

$\{c_{ij}\}$: NON-NEGATIVE CONSTANT
$c_{ij}$=0: $x_i$ AND $x_j$ ARE IN EXCHANGE RELATIONSHIP
$c_{ij}=m$: $x_i$ AND $x_j$ ARE IN ANTI-EXCHANGE RELATIONSHIP

200

ANNEALING-TYPE COMPUTER

CALCULATE $\{x_i\}$ THAT MINIMIZES $f(\{x_i\})$

FIG. 11

40
ZZII
IIIZ
ZIZI
IIZI
IZZI
IZII
ZIIZ
ZIII
IZIZ
YYXX
IIZZ
XYYX
XXYY
YXXY
200
ANNEALING-TYPE COMPUTER
61
ZZII
IIIZ
ZIZI
IIZI
IZZI
IZII
ZIIZ
ZIII
IZIZ
YYXX
IIZZ
XYYX
XXYY
YXXY
200
ANNEALING-TYPE COMPUTER
61
ZZII
IIIZ
ZIZI
IIZI
IZZI
IZII
ZIIZ
ZIII
IZIZ
YYXX
IIZZ
XYYX
62
XXYY
YXXY

# FIG. 12

82a
82b
PARTITION
EXTRACT ELEMENTS FROM SAME PARTITION
YYXX, YXXY, XYYX, XXYY
QUANTUM CIRCUIT GENERATION
83
U
H
H
X
X
X
X
83a
83b
300
GATE-TYPE QUANTUM COMPUTER
MEASUREMENT RESULTS
84a
84b
⟨YYXX⟩ = ...
⟨YXXY⟩ = ...
⟨XYYX⟩ = ...
⟨XXYY⟩ = ...

# FIG. 13

START
LIST OBSERVABLES TO BE ELEMENTS OF OBSERVABLE GROUP
S101
DETERMINE EXCHANGE RELATIONSHIP
S102
CREATE ISING MODEL
S103
PARTITIONING
S104
SELECT OBSERVABLES FROM SAME PARTITION
S105
GENERATE QUANTUM CIRCUIT FOR SIMULTANEOUSLY MEASURING
S106
INSTRUCT GATE-TYPE QUANTUM COMPUTER TO PERFORM CALCULATION
S107
ACQUIRE EXPECTED VALUE OF OBSERVABLE
S108
S109
IS THERE UNSELECTED OBSERVABLE?
YES
NO
OUTPUT SOLUTION
S110
END

# FIG. 14

START
PARTITIONING
S201
SET NUMBER OF OBSERVABLES TO N, AND SET EACH OF OBSERVABLES TO $\{P_1, P_2, ..., P_N\}$
S202
GENERATE N×N ZERO MATRIX C
S203
LOOP n1 OF 1≤n1≤N
S204
LOOP n2 OF n1≤n2≤N
S205
$P_{n1}P_{n2} = P_{n2}P_{n1}$?
YES
NO
S206
$C_{n1,n2}=1$
S207
COMPLETE FOR ALL n2 OF n1≤n2≤N
S208
COMPLETE FOR ALL n1 OF 1≤n1≤N
A

FIG. 15

A
S211
DEFINE BINARY VARIABLE GROUP
$\chi^{(1)} = \{\chi_1, \chi_2, \ldots, \chi_N\}$
S212
n=1
S213
$f(x) = -\sum_{i \in z^{(n)}} X_i + m \sum_{i<j, i \in x^{(n)}, j \in x^{(n)}} C_{i,j} X_i X_i$
S214
INSTRUCT ANNEALING-TYPE COMPUTER TO SEARCH FOR GROUND STATE OF ISING MODEL
S215
ACQUIRE $\chi^{(N)}$ IN WHICH f ($\chi^{(N)}$) IS MINIMIZED
S216
$\mathcal{P}^{(n)} = \{P_i | x_i \in \boldsymbol{x}^{(n)} \cap x_i = 1\}$
S217
$\boldsymbol{x}^{(n+1)} = \{i | x_i \in \boldsymbol{x}^{(n)} \cap x_i = 0\}$
S218
$\boldsymbol{x}^{(n+1)} = \emptyset$
NO
S219
n=n+1
YES
END

# FIG. 16

91
NUMBER OF PARTITIONS
1600
1400
1200
1000
800
600
400
200
0
0
1000
2000
3000
4000
5000
NUMBER OF OBSERVABLES
Naive
OpenF QWC
BoppanaH QWC
BoppanaH GC
BronK QWC
USING ISING MODEL GC (Full-tomography)
USING ISING MODEL GC (VQE-observable)

# FIG. 17

92
CALCULATION TIME(SECONDS)
10000
8000
6000
4000
2000
0
BoppanaH QWC
BoppanaH GC
BronK QWC
OpenF QWC
USING ISING MODEL GC (Full-tomography)
BronK GC
0
1000
2000
3000
4000
5000
NUMBER OF OBSERVABLES
USING ISING MODEL GC (VQE-observable)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020144400 A
- JP 2018521382 A


### Non-patent literature cited in the description


- **PRANAV GOKHALE** ; **OLIVIA ANGIULI** ; **YONG-SHAN DING** ; **KAIWEN GUI** ; **TEAGUE TOMESH** ; **MARTIN SUCHARA** ; **MARGARET MARTONOSI** ; **FREDERIC T. CHONG**. Minimizing State Preparations in Variational Quantum Eigensolver by Partitioning into CommutIng Families & quot. *arXiv : 1907.13623 [quant-ph*, 31 July 2019
- **COCCHI EUGENIO et al.** Graph Partitioning into Hamiltonian Subgraphs on a Quantum Annealer. *arXiv.org*, 18 April 2021